(19) Europäisches Patentamt
European Patent Office
Office européen des brevets

(11) **EP 1 793 445 B1**

(12) **EUROPÄISCHE PATENTSCHRIFT**

(45) Veröffentlichungstag und Bekanntmachung des Hinweises auf die Patenterteilung:
**14.03.2012 Patentblatt 2012/11**

(51) Int Cl.:
*H01M 10/48* (2006.01)      *G01R 31/36* (2006.01)

(21) Anmeldenummer: **06022282.5**

(22) Anmeldetag: **25.10.2006**

(54) **Verfahren zum Bestimmen der Säureschichtung eines Akkumulators**

Method for determining the acid stratification of a battery

Procédé destiné à la détermination de la couche d'acide d'un accumulateur

(84) Benannte Vertragsstaaten:
**DE ES FR IT**

(30) Priorität: **01.12.2005  DE 102005057659**
　　　　　　　**22.12.2005  DE 102005062150**

(43) Veröffentlichungstag der Anmeldung:
**06.06.2007  Patentblatt 2007/23**

(73) Patentinhaber: **Audi AG**
**85045 Ingolstadt (DE)**

(72) Erfinder:
• **Naumann, Rolf**
**96247 Michelau (DE)**

• **Gelbke, Manfred, Dr.**
**96231 Bad Staffelstein (DE)**

(74) Vertreter: **Naumann, Ulrich**
**Ullrich & Naumann**
**Patent- und Rechtsanwälte**
**Schneidmühlstrasse 21**
**69115 Heidelberg (DE)**

(56) Entgegenhaltungen:
**EP-A- 1 231 476    DE-A1- 10 316 638**

**Beschreibung**

Die Erfindung betrifft ein Verfahren zum Bestimmen der Säureschichtung eines Akkumulators, wobei dem Akkumulator in einem Ladevorgang Energie zugeführt und in einem Entladevorgang wieder entnommen wird und wobei einzelne Ausgangsgrößen und/oder Kenngrößen des Akkumulators erfasst oder bestimmt werden.

Zur Stromversorgung mobiler Systeme wird vielfach ein Energiespeicher in Form eines Akkumulators eingesetzt. Akkumulatoren zeichnen sich insbesondere durch ihre relativ hohe Energiedichte, dem häufig relativ einfachen Ladevorgang, der langen Speicherdauer und der schnellen Verfügbarkeit der gespeicherten Energie aus. Insbesondere bei Nass-Akkumulatoren, d.h. bei Akkumulatoren, deren Elektroden sich in Kontakt mit einer flüssigen, meist verdünnten Säure befinden, tritt bei Ladevorgängen der Effekt der Säureschichtung auf. Dieser Effekt liegt darin begründet, dass sich die beim Laden erzeugte Säure in Folge ihres höheren spezifischen Gewichts im unteren Bereich der Batterie ansammelt. Dadurch wird die Säuredichte im unteren Bereich höher als im oberen Bereich. Dieser Effekt wird umso gravierender, je ruhiger der Akkumulator gelagert ist.

Säureschichtung führt im Wesentlichen zu zwei nachteiligen Einflüssen. Zum einen wird die Kapazität des Akkumulators durch Säureschichtung herabgesetzt. Dadurch können bis zu 20 % der Kapazität eingebüßt werden. Dies zeigt insbesondere dann negative Auswirkungen, wenn eine entsprechende Speicherkapazität benötigt wird, jedoch lediglich begrenzter Bauraum zur Verfügung steht. Zum anderen kann die reversible Säureschichtung zu irreversiblen Schädigungen der Elektroden führen. Durch die niedrige Säuredichte im oberen Bereich kommt es infolge des geringeren Widerstands in diesem Bereich im Betrieb zu einer Überladung des Akkumulators. Die höhere Säuredichte im unteren Bereich führt dort bei länger anhaltender Säureschichtung zur Korrosion und somit zu einem vorzeitigen Verschleiß der Elektroden. Insofern ist es erstrebenswert, Säureschichtung möglichst effektiv zu vermeiden. Dazu sind vor allem Informationen über das Vorliegen und die Ausprägung der Säureschichtung notwendig.

Der vorliegenden Erfindung liegt daher die Aufgabe zugrunde, ein Verfahren der eingangs genannten Art derart auszugestalten und weiterzubilden, dass eine Bestimmung der Säureschichtung des Akkumulators bei geringem Aufwand möglich ist.

Erfindungsgemäß wird die voranstehende Aufgabe durch die Merkmale des Patentanspruchs 1 gelöst. Danach ist das in Rede stehende Verfahren zum Bestimmen der Säureschichtung eines Akkumulators derart ausgestaltet, dass unter Verwendung einer oder mehrerer Ausgangsgrößen und/oder Kenngrößen des Akkumulators und/oder deren Änderungen mittels eines mathematischen Modells und/oder einer Zuordnungsvorschrift die Säureschichtung bestimmt wird

In erfindungsgemäßer Weise ist zunächst erkannt worden, dass Säureschichtung verschiedene Ausgangsgrößen und Kenngrößen des Akkumulators beeinflussen. Durch geschickte Ausnutzung verschiedener Informationsquellen lässt sich in erfindungsgemäße weise auf die Ausprägung der Säureschichtung schließen. Dabei können auch zeitliche Verläufe von Ausgangsgrößen oder Kenngrößen von Bedeutung sein und Informationen über die Säureschichtung enthalten. Zur Bestimmung der Säureschichtung wird erfindungsgemäß mindestens ein mathematisches Modell eingesetzt, das das Verhalten des Akkumulators in bestimmten Betriebssituationen beschreibt. Alternativ oder zusätzlich können Zuordnungsvorschriften verwendet werden. Diese Zuordnungsvorschriften können in Form von Algorithmen implementiert sein, können als Tabellen vorliegen oder auf sonstige geeignete Art eine Zuordnung gewährleisten. Die Zuordnungsvorschrift kann dabei Informationen enthalten, die zuvor mittels eines mathematischen Modells berechnet und dann in Form einer Zuordnungsvorschrift abgelegt wurden. Andererseits können auch einzelne Punkte aus einer Messkurve zur Erzeugung der Zuordnungsvorschrift verwendet werden. Dabei können Werte, die zwischen zwei abgespeicherten Werten liegen entsprechend interpoliert werden.

Zum Erreichen einer möglichst detaillierten Beschreibung der Säureschichtung bei gleichzeitig minimalem Aufwand ist es meist ausreichend, lediglich die maximale, die mittlere und die minimale Säuredichte des Akkumulators zu bestimmen. Damit können im Allgemeinen hinreichend genaue Aussagen über das Vorliegen und über das Ausmaß der Säureschichtung erreicht werden. Der angenäherte, dem tatsächlichen Profil der Säuredichte entsprechende Verlauf könnte dann - sofern benötigt - aus den bestimmten Werten mittels entsprechender Modelle bestimmt werden.

Vorzugsweise kommt als Ausgangsgröße des Akkumulators zur Bestimmung der Säureschichtung die Ausgangsspannung und/oder der Ausgangsstrom zum Einsatz. Als Kenngröße können vorzugsweise der Ladezustand, die Kapazität, der Innenwiderstand und/oder die Impedanz des Akkumulators verwendet werden. Zur Präzisierung der Aussagen kann zusätzlich die Temperatur des Akkumulators oder dessen unmittelbarer Umgebung berücksichtigt werden. Dabei können Ausgangsgrößen und/oder Kenngrößen in verschiedenen Betriebsituationen des Akkumulators verwendet werden. Ebenso ist es möglich, dass einzelne Kenngrößen aus verschiedenen Ausgangsgrößen berechnet oder abgeschätzt werden. Dies ist insbesondere dann notwenig, wenn einzelne Kenngrößen nicht direkt oder nur mit relativ großem Aufwand bestimmt werden können.

in einer Ausführungsform der vorliegenden Erfindung wird die Säuredichte im Akkumulator aus einer Änderung der Ausgangsspannung des Akkumulators, die aus einer Änderung der Belastung des Akkumulators resultiert, bestimmt. Vorzugsweise wird dabei die Reduzierung der Ausgangsspannung in Folge einer Erhöhung der Belastung des Akkumulators genutzt. Dabei kann ganz allgemein von unterschiedlichen Belastungszuständen des Akkumulators ausgegangen werden. Das erfindungsgemäße Verfahren gemäß dieser Ausführungsform kann somit problemlos im laufenden Betrieb des Akkumulators angewandt werden. Dabei kann eine Vorrichtung vorgesehen sein, die Veränderungen der Ausgangsspannung und/oder des Ausgangsstroms überwacht. Überschreitet die Veränderung der Ausgangsgrößen eine vorgebbare Schranke, so kann die Bestimmung der Säuredichte ausgelöst werden. Die Säuredichte beschreibt in diesem Fall die mittlere Säuredichte des Akkumulators.

Vorzugsweise wird zur Bestimmung der mittleren Säuredichte der Ladezustand des Akkumulators verwendet. Der Ladezustand des Akkumulators lässt sich dabei durch die verschiedensten aus der Praxis bekannten Verfahren bestimmen. Vorzugsweise kommt jedoch ein Verfahren zum Einsatz, bei dem durch iterative Approximation der Ladezustand bestimmt wird. Dabei wird vorzugsweise ein Verfahren eingesetzt, das basierend auf die Ausgangspannung und den Ausgangsstrom des Akkumulators sowie die Temperatur des Akkumulators oder dessen unmittelbarer Umgebung durch ein mathematisches Modell eine erwartete Ausgangsgröße bestimmt und mit der korrespondierenden gemessenen Ausgangsgröße vergleicht. Bei Abweichungen zwischen den beiden Werten werden der Ladezustand und/oder die Kapazität des Akkumulators iterativ angepasst, bis die Abweichung eine definierbare Schranke unterschreitet.

In einer weiteren Ausführungsform der Erfindung werden die Impedanz und/oder der Innenwiderstand des Akkumulators bestimmt. Der Impedanz- bzw. der Innenwiderstandswert wird dabei direkt, beispielsweise durch Hochfrequenzmessung, gemessen oder aus Ausgangsgrößen bestimmt.

Vorzugsweise wird zusätzlich ein erwarteter Impedanz- und/oder Innenwiderstandswert berechnet oder abgeschätzt. Dabei werden erneut mathematische Modelle und/oder geeignete Zuordnungsvorschriften eingesetzt. Die Zuordnungsvorschrift ist dabei vorzugsweise durch eine Tabelle gebildet. Die Zuordnungsvorschrift kann zu einer genaueren Bestimmung der Werte zusätzliche Parameter als Eingangsgrößen, beispielsweise die Temperatur, aufweisen.

Zum Bestimmen des erwarteten Impedanz- und/oder Innenwiderstandswerts können zusätzlich der Ladezustand und/oder die Kapazität des Akkumulators als Parameter dienen. Dabei können zum Bestimmen des Ladezustands und/oder der Kapazität die verschiedensten aus der Praxis bekannten Verfahren eingesetzt werden, vorzugsweise wird jedoch das zuvor bereits beschriebene Verfahren einer iterativen Approximation genutzt.

Der erwartete und der direkt gemessene oder auf andere Weise bestimmte Impedanz- und/oder Innenwiderstandswert werden dann miteinander verglichen.

Aus dem Vergleich können Rückschlüsse auf das Ausmaß der Säureschichtung in Form der mittleren Säuredichte getätigt werden.

In einer weiteren Ausführungsform der Erfindung wird aus mindestens einer Ausgangsgröße die maximale Säuredichte des Akkumulators bestimmt. Dazu wird die Ausgangsspannung des Akkumulators herangezogen. Durch umfangreiche Untersuchungen wurde herausgefunden, dass die Ausgangsspannung in einem Ruhezustand - also in einem Zustand, in dem im Wesentlichen kein Ausgangsstrom fließt - die Ausgangsspannung im Wesentlichen direkt proportional zur maximalen Säuredichte ist. Daher kann durch einfache Messung der Ausgangsspannung in einem Ruhezustand die maximale Säuredichte bestimmt werden.

Zum Bestimmen der maximalen Säuredichte kann wiederum ein mathematisches Modell oder eine entsprechende Zuordnungsvorschrift dienen. Die Zuordnungsvorschrift kann dabei beispielsweise durch Durchführung einer Messreihe erzeugt werden. Auch die Parameter eines entsprechenden mathematischen Modells können durch Messreihen gefunden werden.

Die minimale Säuredichte wird vorzugsweise aus der maximalen und der mittleren Säuredichte bestimmt. Dabei wird erneut ein entsprechendes Modell oder eine Zuordnungsvorschrift eingesetzt, die den Verlauf des Gradienten der Säuredichte beschreibt. Hier können widerrum verschiedene aus der Praxis bekannte Verfahren eingesetzt werden. In besonders einfacher Art und Weise kann jedoch der Verlauf des Gradienten durch einen linearen Zusammenhang angenährt werden. Je nach Anforderungen der Bestimmung der Säureschichtung können dabei bereits ausreichend gute Ergebnisse erzielt werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen

Fig. 1    eine schematische Darstellung einer Vorrichtung zur Durchführung des erfindungsgemäßen Verfahrens und

Fig. 2    ein schematischer Verlauf der Säuredichte in Bezug auf die Höhe.

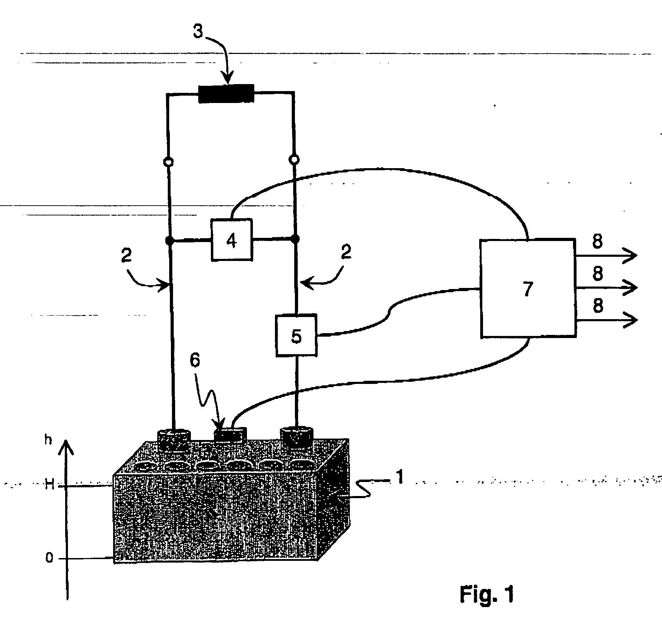

Fig. 1 zeigt eine schematische Darstellung einer Vorrichtung, die zur Implementierung des erfindungsgemäßen Verfahrens geeignet ist. Ein Akkumulator 1, dessen Elektroden in verdünnte Schwefelsäure getaucht sind, ist über Anschlussleitungen 2 mit einer Last 3 verbunden, An den Anschlussleitungen 2 sind Vorrichtungen zur Messung der Spannung 4 und des Stroms 5 angeschlossen oder in diese eingeschleift. Ein Temperatursensor 6 erfasst die Temperatur in der unmittelbaren Umgebung des Akkumulators 1. Der Spannungsmesser 4, der Strommesser 5 und der Temperatursensor 6 sind in geeigneter Weise mit einer Auswerteelektronik 7 verbunden, die verschiedene Ausgangswerte 8 basierend auf die Messwerte bestimmt. Die Auswerteelektronik 7 umfasst im Wesentlichen einen Mikrorechner in Form eines Mikroprozessors, eines digitalen Signalprozessors oder speziell ausgestalteten ASICs oder FPGAs.

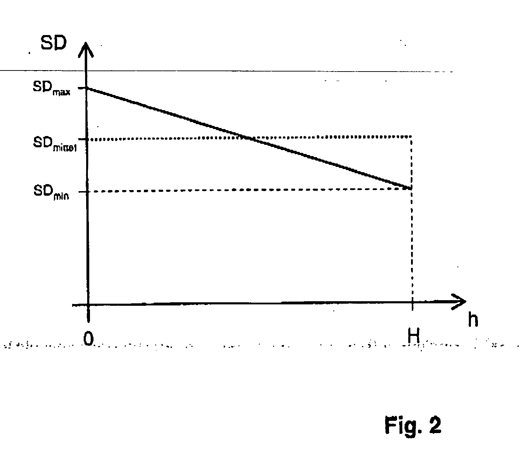

In dem Akkumulator 1 bildet sich bei Vorliegen von Säureschichtung unterschiedliche Säuredichten SD bei unterschiedlichen Höhen h aus. Fig. 2 zeigt beispielhaft eine Annäherung des Verlaufs der Säuredichte über der Höhe. Der dargestellte lineare Zusammenhang wird so im Allgemeinen nicht vorliegen, bildet aber eine durchaus akzeptable Annäherung des tatsächlichen Verlaufs. Insbesondere lassen sich lineare Funktionen sehr schnell berechnen, wodurch bei beschränkten Berechnungsressourcen die zur Verfügung stehende Leistung nicht übermäßig und unnötig belegt wird. Im unteren Bereich des Akkumulators bildet sich eine maximale Säuredichte $SD_{max}$ aus, die bis zur Oberfläche der Säure in der Höhe H bis zu einer minimalen Säuredichte $SD_{min}$ abgenommen hat. Im Mittel beträgt die Dichte der Säure im Akkumulator $SD_{mittel}$.

Bei der Durchführung des erfindungsgemäßen Verfahrens werden die maximale Säuredichte $SD_{max}$ und die mittlere Säuredichte $SD_{mittel}$ bestimmt. Zur Bestimmung der maximalen Säuredichte $SD_{max}$ muss die Ausgangsspannung des Akkumulators 1 in einem Ruhezustand bestimmt werden. Ist die Vorrichtung gemäß Fig. 1 in einem Fahrzeug eingebaut, so könnte dieser Ruhezustand beispielsweise bei Stillstand des Fahrzeugs und abgeschaltetem Motor vorliegen. Aus dieser Ruhespannung wird dann durch die Auswerteelektronik 7 die maximale Säuredichte $SD_{max}$ bestimmt.

Für die Bestimmung der mittleren Säuredichte $SD_{minel}$ kann zum einen ein erfindungsgemäßes Verfahren unter Verwendung von Spannungseinbrüchen bei einer Erhöhung der Belastung des Akkumulators oder ein erfindungsgemäßes Verfahren unter Verwendung des aktuellen Innenwiderstands aus einer impedanzbewertung verwendet werden. Dabei können verschiedene Kriterien bei der Auswahl eines geeigneten Verfahrens angewendet werden. Ein mögliches Kriterium umfasst beispielsweise das Vorliegen von aus einem anderen Zusammenhang bestimmten Messgrößen, die für die Durchführung des erfindungsgemäßen Verfahrens notwendig wären. Sind entsprechende Größen bereits berechnet, so reduziert sich verständlicherweise der Aufwand bei der Bestimmung der Säuredichte. Es könnte dann das Verfahren ausgewählt werden, bei dem der geringste Aufwand zur Bestimmung der Säuredichte betrieben werden muss. Bei bereits bestimmter Kapazität und Ladezustand des Akkumulators wäre das Verfahren im Zusammenhang mit dem Innenwiderstand sinnvoll. Weitere Kriterien könnten die Genauigkeit des Verfahrens, der Berechnungsaufwand oder dergleichen umfassen.

Zur Bestimmung der minimalen Säuredichte kann unter der Annahme eines linearen Zusammenhangs gemäß Fig. 2 die minimale Säuredichte $SD_{min}$ aus der maximalen Säuredichte $SD_{max}$ und der mittleren Säuredichte $SD_{mittel}$ bestimmt werden. Die minimale Säuredichte $SD_{min}$ ergibt sich dann gemäß:

$$SD_{min} = SD_{max} - (2 \times (SD_{max} - SD_{mittel})).$$

Damit sind die wichtigsten Parameter bezüglich der Säureschichtung bestimmt. Über die Differenz zwischen der maximalen und der minimalen Säuredichte kann das Ausmaß der Säureschichtung bestimmt werden. $SD_{min}$ kann als Maß dafür gelten, ob die Gefahr einer Überladung des Akkumulators im oberen Bereich besteht. Die mittlere Säuredichte kann dazu genutzt werden. Aussagen über die maximal erreichbare Kapazität des Akkumulators zu machen. Dabei können entsprechende Zusammenhänge genutzt werden, die die Reduzierung der Kapazität eines Akkumulators infolge von Säureschichtung beschreibt.

Abschließend sei ganz besonders hervorgehoben, dass das zuvor rein willkürlich gewählte Ausführungsbeispiel lediglich zur Erörterung der erfindungsgemäßen Lehre dient, diese jedoch nicht auf das Ausführungsbeispiel einschränkt.

**Patentansprüche**

1. Verfahren zum Bestimmen der Säureschichtung eines Akkumulators, wobei dem Akkumulator in einem Ladevorgang Energie zugeführt und in einem Entladevorgang wieder entnommen wird und wobei einzelne Ausgangsgrößen und/oder Kenngrößen des Akkumulators erfasst oder bestimmt werden, **dadurch gekennzeichnet, dass** unter Verwendung einer oder mehrerer Ausgangsgrößen und/oder Kenngrößen des Akkumulators und/oder deren Änderungen mittels eines mathematischen Modells oder einer Zuordnungsvorschrift die Säureschichtung bestimmt wird, wobei zur Bestimmung der Säureschichtung die maximale, die mittlere und die minimale Säuredichte des Akkumulators bestimmt werden.

2. Verfahren nach Anspruch 1, **dadurch gekennzeichnet, dass** die Ausgangsgrößen die Ausgangsspannung und den Ausgangsstrom umfassen.

3. Verfahren nach Anspruch 1 oder 2, **dadurch ge-**

**kennzeichnet, dass** die Kenngrößen den Ladezustand, die Kapazität, den Innenwiderstand oder die Kapazität des Akkumulators oder die Temperatur des Akkumulators oder dessen unmittelbarer Umgebung umfassen.

**4.** Verfahren nach einem der Ansprüche 1 bis 3, **dadurch gekennzeichnet, dass** Kenngrößen aus Ausgangsgrößen berechnet oder abgeschätzt werden.

**5.** Verfahren nach einem der Ansprüche 1 bis 4, **dadurch gekennzeichnet, dass** aus einer Änderung der Ausgangsspannung des Akkumulators, die aus einer Änderung der Belastung des Akkumulators resultiert, die mittlere Säuredichte bestimmt wird, wobei
die Änderung der Ausgangsspannung eine Reduzierung in Folge einer Erhöhung der Belastung des Akkumulators sein kann und/oder wobei
zur Bestimmung der mittleren Säuredichte der Ladezustand des Akkumulators verwendet wird.

**6.** Verfahren nach einem der Ansprüche 1 bis 4, **dadurch gekennzeichnet, dass** mit Hilfe des Impedanz- oder des Innenwiderstandswert die mittlere Säuredichte bestimmt wird, wobei
der erwartete Impedanz- oder Innenwiderstandswert bestimmt werden kann, wobei
das Bestimmen des erwarteten Impedanz- oder Innenwiderstandswerts unter Verwendung eines mathematischen Modells oder einer Tabelle durchgeführt werden kann.

**7.** Verfahren nach Anspruch 6, **dadurch gekennzeichnet, dass** zum Bestimmen des zu erwartenden Impedanz- oder Innenwiderstandswerts der Ladezustand und/oder die Kapazität des Akkumulators als Parameter verwendet werden können und wobei der gemessenen und der erwartete Impedanz- oder Innenwiderstandswert miteinander verglichen werden können.

**8.** Verfahren nach einem der Ansprüche 1 bis 4, **dadurch gekennzeichnet, dass** zum Bestimmen der maximalen Säuredichte die Ausgangsspannung des Akkumulators herangezogen wird, wobei
zum Bestimmen der maximalen Säuredichte die Ausgangsspannung in einem Ruhezustand gemessen wird, wobei im Ruhezustand im Wesentlichen kein Ausgangsstrom fließen kann.

**9.** verfahren nach einem der Ansprüche 1 bis 4, **dadurch gekennzeichnet, dass** die minimale Säuredichte aus der maximalen und der mittleren Säuredichte bestimmt wird, wobei
zum Bestimmen der minimalen Säuredichte ein durch ein Modell oder eine Zuordnungsvorschrift beschriebener Verlauf des Gradienten der Säuredichte verwendet werden kann und wobei
der Verlauf des Gradienten als ein linearer Zusammenhang angenommen werden kann.

**Claims**

**1.** A method for determining the acid coating of a storage battery, wherein energy is fed to the storage battery in a charging process and is removed again in a discharging process and wherein individual output parameters and/or characteristics of the storage battery are detected or determined, **characterised in that** using one or more output parameters and/or characteristics of the storage battery and/or changes thereof, the acid coating is determined by means of a mathematical model or an assignment rule, wherein in order to determine the acid coating the maximum, the mean and the minimum acid density of the storage battery are determined.

**2.** A method according to claim 1, **characterised in that** the output parameters comprise the output voltage and the output current.

**3.** A method according to claim 1 or 2, **characterised in that** the characteristics comprise the charge state, the capacity, the internal resistance or the capacity of the storage battery or the temperature of the storage battery or of the immediate surroundings thereof.

**4.** A method according to any one of claims 1 to 3, **characterised in that** characteristics are calculated or estimated from output parameters.

**5.** A method according to any one of claims 1 to 4, **characterised in that** the mean acid density is determined from a change in the output voltage of the storage battery resulting from a change in the load on the storage battery, wherein the change in the output voltage can be a reduction following an increase in the load on the storage battery and/or wherein the charge state of the storage battery is used in order to determine the mean acid density.

**6.** A method according to any one of claims 1 to 4, **characterised in that** the mean acid density is determined using the impedance value or the internal resistance value, wherein the expected impedance value or internal resistance value can be determined, wherein determination of the expected impedance value or internal resistance value can be carried out using a mathematical model or a table.

**7.** A method according to claim 6, **characterised in that** the charge state and/or the capacity of the storage battery can be used as parameters in order to determine the expected impedance value or internal resistance value and wherein the measured and the expected impedance value or internal resistance value can be compared with one another.

8. A method according to any one of claims 1 to 4, **characterised in that** the output voltage of the storage battery is used in order to determine the maximum acid density, wherein in order to determine the maximum acid density the output voltage is measured in an idle state, wherein substantially no output current is able to flow in the idle state.

9. A method according to any one of claims 1 to 4, **characterised in that** the minimum acid density is determined from the maximum and the mean acid density, wherein a course of the gradient of the acid density described by a model or an assignment rule can be used to determine the minimum acid density, and wherein the course of the gradient can be assumed to be a linear correlation.

**Revendications**

1. Procédé pour déterminer l'épaisseur de couche d'acide d'un accumulateur, de l'énergie étant amenée à l'accumulateur dans une opération de chargement et étant enlevée à nouveau dans une opération de déchargement et des grandeurs de sortie individuelles et/ou des grandeurs caractéristiques de l'accumulateur étant enregistrées ou déterminées,
   **caractérisé en ce que**, en utilisant une ou plusieurs grandeurs de sortie et/ou grandeurs caractéristiques de l'accumulateur et/ou leurs variations au moyen d'un modèle mathématique ou d'une prescription d'attribution, l'épaisseur de couches d'acide est déterminée, sachant que, pour déterminer la couche d'acide, la densité d'acide maximale, la densité d'acide moyenne et la densité d'acide minimale de l'accumulateur sont déterminées.

2. Procédé selon la revendication 1, **caractérisé en ce que** les grandeurs de sortie comprennent la tension de sortie et le courant de sortie.

3. Procédé selon la revendication 1 ou 2, **caractérisé en ce que** les grandeurs caractéristiques comprennent l'état de charge, la capacité, la résistance intérieure ou la capacité de l'accumulateur ou la température de l'accumulateur ou son environnement immédiat.

4. Procédé selon l'une des revendications 1 à 3, **caractérisé en ce que** des grandeurs caractéristiques sont calculées et/ou évaluées à partir de grandeurs de sortie.

5. Procédé selon l'une des revendications 1 à 4, **caractérisé en ce que** la densité d'acide moyenne est déterminée à partir d'une variation de la tension de sortie de l'accumulateur qui résulte d'une variation de la charge de l'accumulateur,
   la variation de la tension de sortie entraînant une réduction à la suite d'une élévation de la charge de l'accumulateur et/ou
   l'état de charge de l'accumulateur étant utilisé pour déterminer la densité d'acide moyenne.

6. Procédé selon l'une des revendications 1 à 4, **caractérisé en ce que** la densité d'acide moyenne est déterminée à l'aide de la valeur d'impédance ou de la valeur de résistance interne,
   la valeur d'impédance ou la valeur de résistance interne escomptée pouvant être déterminée,
   la détermination de la valeur d'impédance ou de la valeur de résistance interne escomptée étant effectuée en utilisant un modèle mathématique ou un tableau.

7. Procédé selon la revendication 6, **caractérisé en ce que**, pour déterminer la valeur d'impédance ou la valeur de résistance interne à escompter, l'état de charge et/ou la capacité de l'accumulateur peuvent être utilisés comme paramètres et
   les valeurs d'impédance ou de résistance interne mesurée et escomptée pouvant être comparées les unes avec les autres.

8. Procédé selon l'une des revendications 1 à 4, **caractérisé en ce que** la tension de sortie de l'accumulateur est utilisée pour déterminer la densité d'acide maximale,
   la tension de sortie étant mesurée dans un état de repos pour déterminer la densité d'acide maximale, aucun courant de sortie ne pouvant circuler pour l'essentiel dans l'état de repos.

9. Procédé selon l'une des revendications 1 à 4, **caractérisé en ce que** la densité d'acide minimale est déterminée à partir de la densité d'acide maximale et de la densité d'acide moyenne, une courbe, décrite par un modèle ou une prescription d'attribution, du gradient de la densité d'acide pouvant être utilisée pour déterminer la densité d'acide minimale et
   la courbe du gradient pouvant être acceptée comme un rapport linéaire.

**Fig. 1**

**Fig. 2**